# EUROPEAN PATENT SPECIFICATION

(11) **EP 2 550 790 B1**
(45) Date of publication and mention of the grant of the patent: **12.08.2015**
(21) Application number: 11711754.9
(22) Date of filing: 21.03.2011
(51) Int. Cl.: H04L 29/08

(54) **A METHOD FOR PROVIDING DATA FROM A RESOURCE WEAK DEVICE TO A COMPUTER CLIENT**
VERFAHREN ZUR BEREITSTELLUNG VON DATEN AUS EINER RESSOURCENSCHWACHEN VORRICHTUNG FÜR EINEN COMPUTER-CLIENT
PROCÉDÉ PERMETTANT DE FOURNIR DES DONNÉES EN PROVENANCE D'UN DISPOSITIF FAIBLE EN RESSOURCES À UN CLIENT D'ORDINATEUR

(30) Priority: 23.03.2010 DK 201070122
(43) Date of publication of application: 30.01.2013
(73) Proprietor: Nabto Aps, 8200 Århus N (DK)
(72) Inventor: GRIMSTRUP, Peter, DK-8330 Beder (DK); GAMMELBY, Ulrik, DK-8000 Aarhus C (DK)
(74) Representative: Nielsen, Kim Garsdal
(86) International application number: PCT/DK2011/050092
(87) International publication number: WO 2011/116770

(56) References cited:
- US-A1- 2001 037 461
- US-A1- 2002 184 301
- US-A1- 2004 167 689
- US-B1- 7 293 238

## Description

The invention relates to a method for providing data from a resource weak device to a computer client connected to the resource weak device, wherein data communicated from the resource weak device to the computer client is mapped from a first data format into a second data format, allowing the computer client to receive and send data to and from the resource weak device.

In the recent years more and more everyday devices have been provided with microprocessors and communication means, allowing them to communicate and being controlled over the Internet. Examples of such devices are smart home power sockets, smart home heating system, televisions, refrigerators, web-cameras, lighting system etc. The integration of computer processing capabilities and communication means into such devices has opened the door for a new world of possibilities. A user may control the heating system of his holiday home over the Internet, to allow the holiday home to be heated when he arrives, or a user may check his refrigerator for food over the Internet prior to doing grocery shopping.

Web browsers running on clients such as personal computers, PDAs or mobile phones are an efficient and easy tool for users to communicate with their devices. Web browsers simply interpret information provided from servers on the Internet such as HTML pages comprising pictures and Java applets and display the content in a graphical user interface such as a computer screen. Internet users are very familiar using web browsers and the web browser as an application is therefore a very important tool for providing access to content made available on the Internet. Due to the popularity of web browsers, their functionality has been extended to include features such as FTP file transfer and reading RSS feeds in order to make this widespread application even more suitable for accessing content and information made available on the Internet.

US2002/0184301 discloses a web server for communication with one or more electronic devices through a gateway computer, where mapping is made between different protocols. Any mapping between these protocols takes place on the server.

WO2009/103291 discloses a method and a system for identifying and connecting clients connected to the same network. The system comprises a control server for performing the steps of connecting a first client running a web browser application to the control server and registering client specific connection information associated with the first client. Receiving from the web browser application a request for an unique URI defined by the control server and associated with a second client, requesting the control server to mediate a connection to the second client associated with the unique URI and receiving data from the second client on the direct connection and forwarding the data to the web browser application for displaying the received data in a graphical user interface.

US 6,112,246 discloses a server equipped network device controlling and accessing information from a remote device separate fom the server equipped network device, which server equipped network device is adapted to publish a web page to be transmitted to a computer client by using HTTP. The server equipped network device comprises a control and access component conducting the communication with and control of the remote device and providing information about the remote device to a server component publishing the web page to be transmitted to the computer client.

However, the implementation of such solutions are based on the assumption that the clients involved have processing power and storage capacity available for establishing a communication connection, conducting the following communication, process and communicate the specific data of the client to other clients. Hence, such solutions are based on the assumption that clients are server equipped network device having storage and processing capabilities for running a server for providing data for other clients.

It is a purpose of the present invention to provide a system, as disclosed in claim 15, and a method, as disclosed in claim 1, for transmitting data between a computer client and network device with limited processing and storage capabilities. And it is in particular a purpose to perform such transmission of data by utilizing exiting hardware and software components.

With a view to this the method according to the present invention is characterized in that a data stream between the resource weak device and the computer client is mapped from a low level data format to a high level data format by a mapping function in the computer client, the mapping function comprises static data relating to the resource weak device and the high level data format link to the static data, the second high level data format is used for displaying the data from the resource weak device at the computer client.

This allows for implementing a web server like functionality using a very limited storage in the range of tens of kilobytes as the processing and logic required to establish a connection and communicating data massages in a low level data format is very limited compared to the processing and storage required when implementing a web server in the prior art. The very limited storage requirement for implementing the web server functionality is highly appreciated because it makes the implementation more feasible and possible in existing resource weak devices, e.g. embedded systems with limited hardware resources. Hence an end user connecting to the resource weak device from the standard computer client, will experience the communication with the resource weak device as if the a web server was implemented in the resource weak device, but by providing the computer client with a mapping function. Therefore, depending on the nature of the connection between the resource weak device and the computer client, the resource weak device may use as much as 40 to 60 % or more of its processing and storage resources communicating with the computer device if the connection is very resource demanding connection such as a wireless network connection, and in the range of 10 to 20 % or less if the resource weak device and the computer client is connected directly using a wires connection such as RS232 or USB.

It is an advantage to utilize the available resources of the computer client to implement a web server like functionality that enable the computer client to display en data from the resource weak device, and thereby the high level data format may at least 30%, 50%, 100%, 200% or 1000% times the number of bytes of the low level data format.

A resource weak device is to be understood as a specific purpose computer device such as an embedded system, which with respect to processing and storage resources is configured to conduct a specific task or functionality as a stand alone device or in relation to control and data logging in other equipment. The computer client is to be understood as a general purpose computer client having processing and storage resources available for conducting several different tasks and functionalities, i.e. the computer client may for instance be general purpose computer equipment such as a personal computer, a PDA or a mobile phone.

In a further development of the invention, which takes advantage of exiting infrastructure a web browser application of the computer client is used to establish the connection to the resource weak device by using a plug-in.

When implementing the invention by using a web browser and a plug-in it is also possible to easily provide the required mapping function by download from the Internet as an alternative to receiving it from a storage device inserted into or attached to the computer device. It is to be understood that the invention may be implemented as an application on a computer client using an exiting web browser as a plug-in to the application implementing the method according to the invention. However, in a preferred embodiment the method according to the invention is implemented by adding a plug-in to exiting web browser in order to implement the web server functionality pertaining to the resource weak device by using the resource available in a computer client.

In an even further development of this preferred embodiment, the plug-in performs the mapping function and the direct communication with the resource weak device.

In an especially advantageous embodiment of the invention, a direct connection between the resource weak device and the computer client is mediated by a control server, preferably by examining several different means of connections.

With the provision of a control server mediating the connection it is possible to establish a connection between the resource weak device and the computer client even of one of the two or both are connected to the Internet, but not directly accessible. Moreover, the control server may be used to provide the computer client with the plug-in and hence the required mapping function and the static data relating to the resource weak device.

In a further development of the use of the control server, the plug-in transmits an identifier associated with the resource weak device to the control server, preferably said identifier is in the form of an URI.

In an even further development of the invention, which provides a utilization of the existing domain name infrastructure, the identifier of the resource weak resource is a domain name address that resolves to the control server.

In a practical embodiment especially suitable for implementing the invention using a web browser, the high level data format is a markup language data format to be interpreted and displayed by a web browser application, i.e. the high level data is for instance HTLM, XML, XHTML or RTF.

In a practical implementation requiring very limited processing resources by the resource weak device, the low level data format is a binary data format.

In a further practical implementation, the static data comprises a number of static data elements such as scripts, images, video and audio.

In a further practical embodiment that allows for a very simple implementation, the mapping function maps from a N bit binary number being the low level data format to HTML code being the high level data format.

In a further development of this simple implementation, the HTLM code links to the static data, resulting in a full web page.

In an embodiment allowing the user of the computer client to control the resource weak device, the mapping function is adapted to convert a user input from the web page into low level data format to be transmitted to the low resource device.

In another embodiment, the computer client is a general purpose computer client and the resource weak device is a specific purpose computer device.

In a practical embodiment allowing the provider of a resource weak device to add new features to an existing system, the control server is adapted to provide the computer client with the client specific data and the mapping function.

In a further development of this embodiment, the control server further comprises an user interface for allowing an administrator to modify functionalities of the mapping function of the first client, preferably to modify the client specific data.

In a practical embodiment allowing the use of a resource weak device for different purpose or for instance to display data in different languages, multiple mapping functions and/or multiple client specific data is associated with the resource weak device.

In a further development embodiment, the computer device is adapted to provide reliable logic and the resource weak device is adapted to provide simple stateless request-to-response logic. This will save hardware resources at the resource weak device.

In some embodiments said device further is adapted to search for said mapping function on a local available storage.

Preferably, the method according to the invention is implemented as a system for providing data from a resource weak device to a user of a computer device.

It is furthermore a purpose of the present invention, to provide a method or system for easily making devices having limited resources available over the Internet. Hence a further aspect of the invention relates to a control server is configured for connection to a network, for connecting a first client connected to the network to a second client connected to the network, the control server being adapted to, connecting the first client to the control server and registering first client specific connection information, deriving a mapping function associated with said first client, connecting a second client running an application to said control server, receiving from said application an identifier associated with said first client, making said mapping function available to said second client, and establishing a direct connection between said first client and said second client, wherein said mapping function enables said second client to map a data stream between the first client and the second client between a first data format and a second data format.

The network may be any kind of network such as the Internet, a local area network or even a local area network connected to the Internet. The clients may be any kind of devices such as personal computer, PDA, mobile phones or everyday devices such as home power sockets, home heating system, televisions, refrigerators, web-cameras and lighting systems. The mapping function is adapted to map from a first data format into a second data format. The data formats may be any kind of data formats. In some embodiments the first data format is a low level data format such as binary data and the second data format is a high level data format such as HTML. The client specific connection information may comprise information identifying the client position in the network, such as an IP address and a port number when the network is the Internet. The identifier associated with the first client may be any kind of identifier such as an uniform resource identifier (URI). The control server may serve any number of clients. The mapping function associated with the first client may be stored on the control server before the first client connects to the control server, or the mapping function may be stored another place on the network. The control server may make the mapping function available to the second client by sending the mapping function to the second client, or linking to the mapping function. The direct connection between the first and second client may be established by using Transmission Control Protocol (TCP) or User Datagram Protocol (UDP) hole punching mediated by the control server. In some embodiments the data stream is from the first client to the second client, in some embodiments the data stream is from the second client to the first client, and in some embodiments the data stream is both from the second client to the first client and from the first client to the second client. The data stream may be based on UDP. This format is a very efficient for tiny resource systems (compared to full TCP implementation), however UDP is non-reliable logic. Reliable logic (doing retransmission on loss etc.) is complex.

In some embodiments the second client is adapted to provide reliable logic and the first client is adapted to provide simple stateless request-to-response logic. Thereby resource can be saved on the first client, which may be a resource weak device.

By having a control server mediating direct connection between clients on a network, an easy and efficient way of making devices available over a network such as the Internet is provided. The control server enables devices to communicate over a network without initially knowing their positions in the network. The use of a mapping function makes it possible to decrease the resource requirements for the first client as the protocol for the first client can be coded in a simple data format such as binary.

In some embodiments the control server is adapted to enable the second client to access first client specific data.

The first client specific data may be any kind of data such as graphical data, audio data, or scripts. The graphical data may be any graphical data such as images or videos. The first client specific data is preferably not stored on the first client. The first client specific data may be stored on the control server or on another server/client connected to the network. The first client specific data may be stored on a GUI repository. The first client specific data may be an integral part of the mapping function.

By enabling the second client to access first client specific information not stored on the first client, the resource requirements, such as the storage requirements and bandwidth requirements, of the first client can be further decreased.

In some embodiments the control server may be able to store (cache) certain predefined requests, and /or events that the clients in advance can register/store before the data is needed. The requests, and/or events may be stored in a compact format. Thereby a type of caching is provided that will be very efficient compared to normal "HTML-caching". Further this may enable the second client to get requests from the first client even if the first client is not longer available.

In some embodiments the application is a browser application. The browser application may be any browser application such as Internet

Explorer or Firefox.

In some embodiment a plug-in installed in a web browser application of the second client is used for communicating with the control server and establishing a direct connection to the first client mediated by the control server. A plug-in is a easy way to add the new functionality provided by the invention to web browser applications already installed on clients. This furthermore makes it possible to utilize existing technology such as Asynchronous Plugable Protocols for Microsoft Internet Explorer, which are registered in the browser to handle all URIs in the namespace of a new protocol for establishing direct communication between clients.

In some embodiment the control server is adapted to establish a direct connection using a first channel and a second channel, wherein the first channel protocol is adapted to loss less communication and the second channel is adapted for streaming content.

In some embodiments the first client is a resource weak device. A resource weak device may be an embedded device. Examples of resource weak devices may be smart home power sockets, smart home heating system, televisions, refrigerators, web-cameras, lighting system or simple mobile phones. A resource weak device may be a device using at least 10 %, 20%, 40% or 60% of the processing resources and/or storage resources of the device for making the device available over a network according to some embodiments of the present invention.

In some embodiments the second client is a resource strong device. A resource strong device may be a device such as personal computers, PDAs or high end mobile phones. A resource strong device may be a device using at most 40%, 10% 5% or 2% of the processing resources and/or storage resources of the device for making the device available over a network according to some embodiments of the present invention.

In some embodiments the first data format is a binary format. In some embodiments the control server establishes the direct connection between said first client and said second client by examining several different means of connections.

The different means of connection means examined may be connections mediated by UDP-holepunching, establishing portforwaring in the firewalls via Universal Plug and Play (UPNP), or TCP relay (TURN).

In some embodiments the identifier of the first client is a Domain name system (DNS) address that resolves to the control server. Thereby both the first and second client is easily able to locate the control server via DNS. Further, if the application e.g. browser plugin, is not installed, by entering the URI into a web browser, the web browser of the second client may be connected to a web server that may run on the control server which may be able to guide the users through installing the application e.g. plug-in.

In some embodiments the control server further comprises an user interface for allowing an administrator to modify functionalities of the mapping function of the first client. The user interface may be any kind of user interface, such as a special HTML page allowing an administrator access. By allowing an administrator to alter functionalities of the mapping function, a more flexible system is provided. When the first client is an embedded device such as a smart home power socket, a manufacture of the device may optimise the user interface of the device after the device has been launched, simply by altering the devices mapping function.

In some embodiments, multiple mapping functions and/or multiple client specific data are associated with said first client. Each mapping function and/or client specific data, may relate to a given language. Thereby a user may select a language prior to communicating with an embedded device. This will further increase the flexibility and user-friendliness of the system.

In some embodiments the client specific data comprises graphical data.

In some embodiments the number of bytes of the second data format is at least 30%, 50%, 100%, 200% or 1000% larger than the number of bytes of the first data format.

A even further aspect of the invention relates to a method for connecting a first client connected to a network with a second client connected to said network using a control server, the method comprises the steps of connecting the first client to the control server and registering first client specific connection information, deriving a mapping function associated with said first client, connecting a second client running an application to said control server, receiving from said application a unique identifier associated with said the first client, sending said mapping function associated with said first client to said second client, and establishing a direct connection between said first client and said second client, wherein said mapping function enables said second client to map a data stream between the first client and the second client between a first data format and a second data format. In some embodiments the steps are performed in the control server.

A further aspect of the invention relates to a device connectable to a network, adapted to communicate with a second device connected to said network, the device running an application and being adapted to, connect with a control server, sending from said application an identifier associated with said the second device, receiving a mapping function associated with said second device from said control server, communicate using a direct connection with said second device, wherein said mapping function enables said device to map a data stream between the device and the second device between a first data format and a second data format.

The local available storage may be a disk, cache, CD/DVD or maybe broadcast on local LAN for others with a mapping function, or ask the second device for a mapping function or even a simplified/partial mapping function.

In some embodiments said device is adapted to be connected to a local area network, said local area network not being connected to the Internet. If the clients are not connected to the Internet, and therefore is not able to transmit and collect information from the controller, but is located on the same local area network the direct connection between the clients is established by other means than through information transmitted through the controller, for example broadcast or multicast mechanisms.

The present invention relates to different aspects, each yielding one or more of the benefits and advantages described in connection with the first mentioned aspect, and each having one or more embodiments corresponding to the embodiments described in connection with the first mentioned aspect and/or disclosed in the appended claims.

In the following detailed description, features and advantages of the present invention will be further elucidated by exemplary embodiments of the present invention, with reference to the appended drawings, wherein
Fig. 1 shows how a direct connection may be mediated by a control server, between a first client in the form of a resource weak device and a second client in the form a resource strong device, according to an embodiment of the present invention,
Fig. 2 shows how a mapping function may transform data from a first data format of a first device into a second data format to be interpreted by a second device, according to an embodiment of the present invention,
Fig. 3 shows a computer client connected to a computer network according to some embodiments.
Fig. 4 shows the structure of a computer client or a resource weak device according to the invention,
Fig. 5 shows a control server mediating communication connections according to some embodiments of the invention.

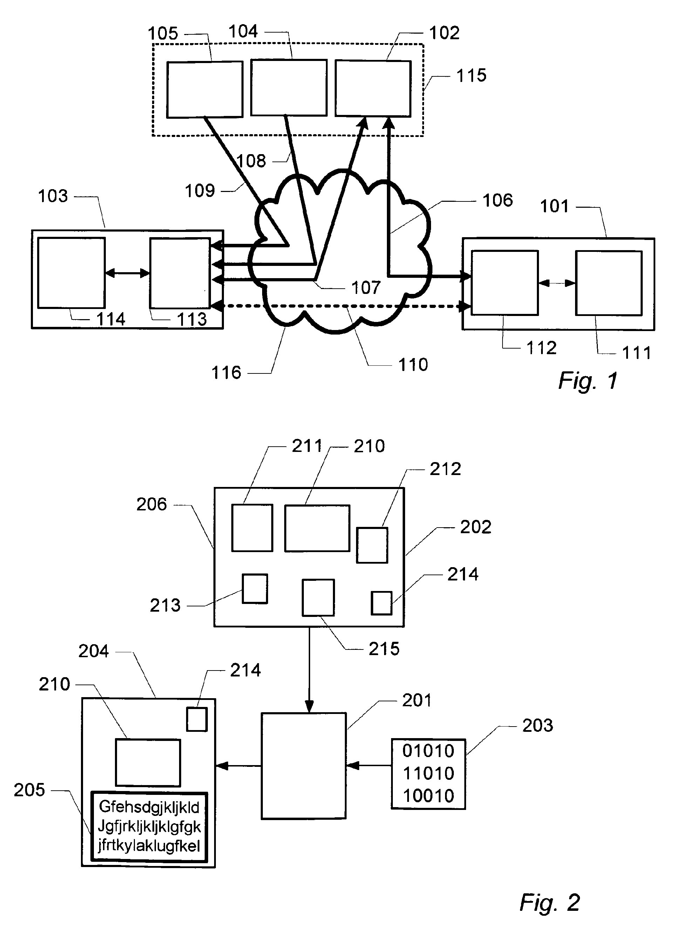

In Fig. 1 is shown how a direct connection may be mediated by a control server 102 between a first client in the form of a resource weak device 101 and a second client in the form a resource strong device 103, according to an embodiment of the present invention. The control server 102, the resource weak device 101 and the resource strong device 103 are all connected to the same network 116. When the resource weak device 101 connects to the network 116, an application 112 of the resource weak device 101 having stored a network address of the control server 102 establish connection 106 to the control server 102, and register specific connection information e.g. an identifier of the resource weak device 101 and/or a network address such as an IP and an port number of the resource weak device 101. When the resource strong device 103 wants to communicate with the resource weak device 101, an application in the form of a web browser 114 of the resource strong device 103, establish a connection 107 to the control server 102 using a plug-in 113. The plug-in 113 transmits an identifier associated with the resource weak device 101 to the control server, in the form of an URI. In response to the received URI the control server 102 makes a mapping function 104 associated with the resource weak device 101 available to the resource strong device 103, and optionally data 105 associated with the resource weak device 101. The mapping function 104 and the data 105 may be merged together in a single data structure. The mapping function 104 and the data 105 may be stored on the control server 102 or on another server/client connected to the network 116. The mapping function 104 and the data 105 are preferably not stored on the resource weak device 101. This allows the resource requirement of the resource weak device 101 to be lowered. Next the control server 102 mediates a direct connection 110 between the resource weak device 101 and the resource strong device 103. Using the mapping function 104 and optionally the data 105, the data stream between the resource strong device 103 and the resource weak device 101 is mapped from a first data format into a second data format, allowing the resource strong device 103 to receive and send information from and to the resource weak device 101.

Fig. 2 shows a mapping function 201 for transforming data from a first data format in the form of binary data 203 origin from a resource weak device, into a second data format in the form of a web page 204 according to an embodiment of the present invention. The number of bits used to code the binary data 203 may be known before hand by the mapping function 201 or alternatively be supplied to the mapping function 201 by a header in the binary data 203. The mapping function 201 is further provided with static data 206 related to the resource weak device. The static data 206 comprise a number of static data elements 210, 211, 212, 213, 214, 215 such as scripts, images, videos and audio. The mapping function 201 maps an N bit binary number into a html code. The mapping function may map from a single N bit binary number into a single HTLM command or into several number of commands or even several number of page of html commands. The resulting HTML document may link to the static data 206, resulting in a full web page 204. Thereby a small number of bytes of binary data 203 send over a low bandwidth connection can be converted into a full web page 204 of possibly several Megabytes. The mapping function 201 may additionally be able to convert a user input from the web page into a binary data format for transmitting to the low resource device.

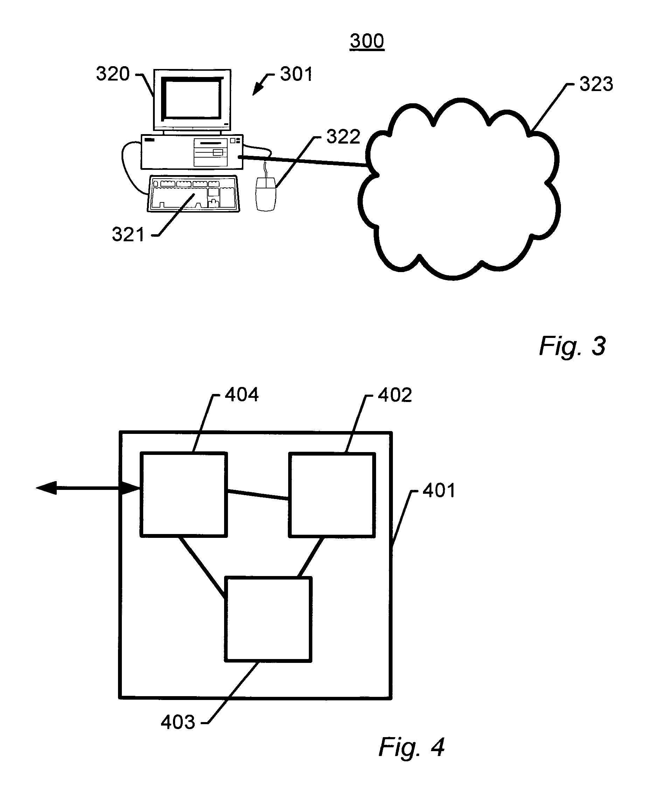

Fig. 3 shows a client according to some embodiments. The client is a suitably programmed computer 301, e.g. a personal computer, a workstation, etc., comprising a display 320, a keyboard 321 and a computer mouse 322 and/or another pointing device, such as a touch pad, a track ball, a light pen, a touch screen, or the like. The computer system further comprises a file storage system. The file storing system may comprise the application. The computer system 300 further comprises one or more interfaces for connecting the computer with other clients via a computer network 323, e.g. the Internet.

The keyboard 321 and/or mouse and/or other input means may be used to provide the control server with an identifier of another client. The display 320 may be used to provide a graphical presentation of data received from another client. The keyboard 321 and/or mouse and/or other input means may be used to communicate with another client.

Fig. 4 shows a device/client 401 according to some embodiments. The device/client comprises a memory unit 402, a processing unit 403 and an interface 404 for connecting the device/client with other device/clients via a computer network

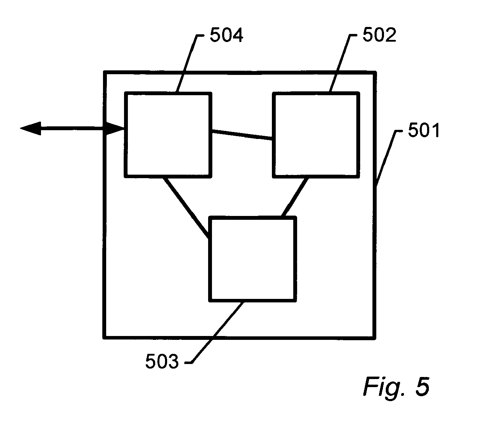

Fig. 5 shows a control server 501 according to some embodiments. The control server 501 comprises a memory unit 502*,* a processing unit 503 and an interface 504 for connecting the control server with other device/clients via a computer network

Below is described an embodiment according to the present invention, where a second client being a PC operated by a user wishes to communicate with a first client being the users holiday cottage home automation system. The PC runs an application being a web-browser having extra functionalities added by an installed plug-in.

The identifier of the users holiday cottage home automation system is predefined from the factory to be "serial3994. homeautomationexperts.com". Homeautomationexperts.com (HAE) is the manufacture of the home automation system, and has registered this address to resolve to one of HAE's control servers. Therefore last time when the home automation system did a boot, the home automation system resolved its own predefined address and thereby the control server it has to register with.

Now when the user installed the home automation system, he/she noticed the "serial3994.homeautomationexperts.com" address on the device, and bookmarked it in his/her browser running on his/her PC. Later when he/she types the address into the browser, or uses the predefined bookmark, the browser will acknowledge the URL as a http address resolving the URL to the control server. The control server will examine the browser and if no plug-in is installed, ask and guide the user to install it. Lastly the control server will redirect the user to nab-to://serial3994.homeautomationexperts.com. The plugin will get this request through the registering the "nabto://" handler via the Asynchronous Pluggable Protocol API. The plug-in will resolve the URL through DNS, and thereby get the address of the control server. The plug-in will communicate with the control server, and receive URL(s) of a mapping function and data associated with the home automation system. The data being a GUI repository. The plug-in will download the mapping function and the GUI repository. The plug-in will present the static index.html page (normal behavior for /) located in the root folder of the GUI repository. In this page the following link will be present: nabto://serial3994.homeautomationexperts.com/GetTemperaturesensor

Since this is what the user need, the user clicks on the link. Next a direct connection is established between the user PC and the home automation system and by using the mapping function, a data stream between the PC and the home automation system is mapped between a first data format and a second data format. Thereby the user is allowed to receive information and control his/her home automation system using his/her PC.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method for providing data from a resource weak device (101) to a computer client (103) connected to the resource weak device, wherein data communicated in a data stream from the resource weak device (101) to the computer client (103) is mapped from a first data format into a second data format, allowing the computer client (103) to receive and send data to and from the resource weak device (101), and a mapping function comprises static data (206) relating to the resource weak device (101), and the second data format links to the static data (206), and the second data format is used for displaying the data from the resource weak device at the computer client (101), and the data is communicated in the data stream between the resource weak device (101) and the computer client (103) and mapped from a first data format into a second data format, where the first data format is a low level data format and the second data format is a high level data format, by a mapping function in the computer client (101), **characterized in that** a web browser application of the computer client (103) is used to establish the connection to the resource weak device by using a web browser application plug-in (113), and the web browser application plugin performs the mapping function and direct communication with the resource weak device.

2. A method according to claim 1, wherein the direct connection between the resource weak device and the computer client is mediated by a control server, preferably by examining several different means of connections.

3. A method according to claim 2, wherein the plug-in (113) transmits an identifier associated with the resource weak device to the control server, preferably said identifier is in the form of an URI.

4. A method according to claim 3, wherein the identifier of the resource weak device is a domain name address that resolves to the control server.

5. A method according to any previous claim, wherein the high level data format is a markup language data format to be interpreted and displayed by a web browser application.

6. A method according to any previous claim, wherein the low level data format is a binary data format.

7. A method according to any previous claim, wherein the static data (206) comprises a number of static data elements such as scripts, images, video and audio.

8. A method according to any previous claim, wherein the mapping function maps from a N bit binary number being the low level data format to HTML code being the high level data format.

9. A method according to any previous claim, wherein the HTLM code links to the static data (206), resulting in a full web page (204).

10. A method according to any previous claim, wherein the mapping function is adapted to convert a user input from the web page (204) into low level data format to be transmitted to the resource weak device.

11. A method according to any previous claim, wherein the computer client is a general purpose computer client and the resource weak device is a specific purpose network enabled computer device, preferably an embedded system with limited hardware resources compared to the computer client.

12. A method according to claim 2 to 11, wherein the control server (102, 501) is adapted to provide the computer client (103, 301) with client specific data (206) and the mapping function.

13. A method according to claim 2 to 12, wherein the control server (102, 501) further comprises a user interface for allowing an administrator to modify functionalities of the mapping function of the resource weak device, preferably to modify client specific data (206).

14. A method according to any previous claim, wherein multiple mapping functions and/or multiple client specific data is associated with the resource weak device.

15. A system comprising a resource weak device and a computer client, which system implementing the method according to any of the claims 1 to 14.

## Patentansprüche

1. Verfahren zum Bereitstellen von Daten aus einer ressourcenschwachen Vorrichtung (101) für einen mit der ressourcenschwachen Vorrichtung verbundenen Computer-Client (103), wobei in einem Datenstrom von der ressourcenschwachen Vorrichtung (101) zu dem Computer-Client (103) übermittelte Daten aus einem ersten Datenformat in ein zweites Datenformat abgebildet werden, wodurch der Computer-Client (103) Daten zu und von der ressourcenschwachen Vorrichtung (101) empfangen und senden kann, und eine Abbildungsfunktion statische Daten (206) in Bezug auf die ressourcenschwache Vorrichtung (101) umfasst und das zweite Datenformat mit den statischen Daten (206) verknüpft und das zweite Datenformat zum Anzeigen der Daten aus der ressourcenschwachen Vorrichtung in einem Computer-Client (101) verwendet wird und die Daten in dem Datenstrom zwischen der ressourcenschwachen Vorrichtung (101) und dem Computer-Client (103) übermittelt und durch eine Abbildungsfunktion in dem Computer-Client (101) aus einem ersten Datenformat in ein zweites Datenformat abgebildet werden, wobei das erste Datenformat ein Datenformat auf niedriger Ebene und das zweite Datenformat ein Datenformat auf hoher Ebene ist, **dadurch gekennzeichnet, dass** eine Webbrowser-Anwendung des Computer-Clients (103) zum Herstellen der Verbindung mit der ressourcenschwachen Vorrichtung durch Verwendung eines Webbrowser-Anwendungs-Plugin (113) verwendet wird und das Webbrowser-Anwendungs-Plugin die Abbildungsfunktion und direkte Kommunikation mit der ressourcenschwachen Vorrichtung durchführt.

2. Verfahren nach Anspruch 1, wobei die direkte Verbindung zwischen der ressourcenschwachen Vorrichtung und dem Computer-Client durch einen Steuerserver vermittelt wird, vorzugsweise durch Untersuchen mehrerer verschiedener Mittel von Verbindungen.

3. Verfahren nach Anspruch 2, wobei das Plugin (113) eine der ressourcenschwachen Vorrichtung zugeordnete Kennung zu dem Steuerserver sendet, wobei die Kennung vorzugsweise in Form eines URI vorliegt.

4. Verfahren nach Anspruch 3, wobei die Kennung der ressourcenschwachen Vorrichtung eine Domänennamen-adresse ist, die sich auf den Steuerserver auflöst.

5. Verfahren nach einem der vorhergehenden Ansprüche, wobei das Datenformat auf hoher Ebene ein Markup-Language-Datenformat ist, das durch eine Webbrowser-Anwendung zu interpretieren und anzuzeigen ist.

6. Verfahren nach einem der vorhergehenden Ansprüche, wobei das Datenformat auf niedriger Ebene ein binäres Datenformat ist.

7. Verfahren nach einem der vorhergehenden Ansprüche, wobei die statischen Daten (206) eine Anzahl statischer Datenelemente umfassen, wie etwa Scripts, Bilder, Video und Audio.

8. Verfahren nach einem der vorhergehenden Ansprüche, wobei die Abbildungsfunktion aus einer N-Bit-Binärzahl, die das Datenformat auf niedriger Ebene ist, auf HTML-Code abbildet, der das Datenformat auf hoher Ebene ist.

9. Verfahren nach einem der vorhergehenden Ansprüche, wobei der HTML-Code mit den statischen Daten (206) verknüpft, was zu einer vollen Webseite (204) führt.

10. Verfahren nach einem der vorhergehenden Ansprüche, wobei die Abbildungsfunktion dafür ausgelegt ist, eine Benutzereingabe aus der Webseite (204) in das zu der ressourcenschwachen Vorrichtung zu sendende Datenformat auf niedriger Ebene umzusetzen.

11. Verfahren nach einem der vorhergehenden Ansprüche, wobei der Computer-Client ein Vielzweck-Computer-Client ist und die ressourcenschwache Vorrichtung eine netzwerkbefähigte Vielzweck-Computervorrichtung ist, vorzugsweise ein eingebettetes System mit im Vergleich zu dem Computer-Client begrenzten Hardwareressourcen.

12. Verfahren nach Anspruch 2 bis 11, wobei der Steuerserver (102, 501) dafür ausgelegt ist, dem Computer-Client (103, 301) Client-spezifische Daten (206) und die Abbildungsfunktion bereitzustellen.

13. Verfahren nach Anspruch 2 bis 12, wobei der Steuerserver (102, 501) ferner eine Benutzeroberfläche umfasst, um einem Administrator zu erlauben, Funktionalitäten der Abbildungsfunktion der ressourcenschwachen Vorrichtung zu modifizieren, vorzugsweise um Client-spezifische Daten (206) zu modifizieren.

14. Verfahren nach einem der vorhergehenden Ansprüche, wobei mehrere Abbildungsfunktionen und/oder mehrere Client-spezifische Daten der ressourcenschwachen Vorrichtung zugeordnet sind.

15. System, das eine ressourcenschwache Vorrichtung und einen Computer-Client umfasst, wobei das System das Verfahren nach einem der Ansprüche 1 bis 14 implementiert.

## Revendications

1. Procédé permettant de fournir des données à partir d'un dispositif faible en ressources (101) à un ordinateur client (103) connecté au dispositif faible en ressources, dans lequel des données communiquées dans un flux de données du dispositif faible en ressources (101) vers l'ordinateur client (103) sont mappées d'un premier format de données à un second format de données, permettant à l'ordinateur client (103) de recevoir et d'envoyer des données vers et depuis le dispositif faible en ressources (101), et une fonction de mappage comprend des données statiques (206) concernant le dispositif faible en ressources (101), et le second format de données est lié aux données statiques (206), et le second format de données est utilisé pour afficher les données depuis le dispositif faible en ressources au niveau de l'ordinateur client (101), et les données sont communiquées dans le flux de données entre le dispositif faible en ressources (101) et l'ordinateur client (103) et mappées d'un premier format de données à un second format de données, où le premier format de données est un format de données de bas niveau et le second format de données est un format de données de haut niveau, par une fonction de mappage dans l'ordinateur client (101), **caractérisé en ce qu'**une application de navigateur internet de l'ordinateur client (103) est utilisée pour établir la connexion au dispositif faible en ressources en utilisant un module d'extension d'application de navigateur internet (113), et le module d'extension d'application de navigateur internet exécute la fonction de mappage et une communication directe avec le dispositif faible en ressources.

2. Procédé selon la revendication 1, dans lequel la connexion directe entre le dispositif faible en ressources et l'ordinateur client passe par un serveur de commande, de préférence par l'examen de plusieurs moyens différents de connexion.

3. Procédé selon la revendication 2, dans lequel le module d'extension (113) transmet un identifiant associé au dispositif faible en ressources au serveur de commande, ledit identifiant se présentant de préférence sous la forme d'un URI.

4. Procédé selon la revendication 3, dans lequel l'identifiant du dispositif faible en ressources est une adresse de nom de domaine qui pointe vers le serveur de commande.

5. Procédé selon l'une quelconque des revendications précédentes, dans lequel le format de données de haut niveau est un format de données de langage de balisage devant être interprété et affiché par une application de navigateur internet.

6. Procédé selon l'une quelconque des revendications précédentes, dans lequel le format de données de bas niveau est un format de données binaire.

7. Procédé selon l'une quelconque des revendications précédentes, dans lequel les données statiques (206) comprennent un certain nombre d'éléments de données statiques, tels que des scripts, des images, de la vidéo et de l'audio.

8. Procédé selon l'une quelconque des revendications précédentes, dans lequel la fonction de mappage effectue un mappage depuis un nombre binaire à N bits étant le format de données de bas niveau vers un code HTML étant le format de données de haut niveau.

9. Procédé selon l'une quelconque des revendications précédentes, dans lequel le code HTLM établit des liens vers les données statiques (206), ce qui conduit à une page web complète (204).

10. Procédé selon l'une quelconque des revendications précédentes, dans lequel la fonction de mappage est conçue pour convertir une entrée d'utilisateur à partir de la page Web (204) en un format de données de bas niveau à transmettre au dispositif faible en ressources.

11. Procédé selon l'une quelconque des revendications précédentes, dans lequel l'ordinateur client est un ordinateur client universel, et le dispositif faible en ressources est un dispositif informatique réseau à usage spécifique, de préférence un système intégré ayant des ressources matérielles limitées par rapport à l'ordinateur client.

12. Procédé selon les revendications 2 à 11, dans lequel le serveur de commande (102, 501) est conçu pour fournir à l'ordinateur client (103, 301) des données spécifiques au client (206) et la fonction de mappage.

13. Procédé selon les revendications 2 à 12, dans lequel le serveur de commande (102, 501) comprend en outre une interface utilisateur pour permettre à un administrateur de modifier des fonctionnalités de la fonction de mappage du dispositif faible en ressources, de préférence pour modifier des données spécifiques au client (206).

14. Procédé selon l'une quelconque des revendications précédentes, dans lequel plusieurs fonctions de mappage et/ou plusieurs données spécifiques au client sont associées au dispositif faible en ressources.

15. Système comprenant un dispositif faible en ressources et un ordinateur client, lequel système met en oeuvre le procédé selon l'une quelconque des revendications 1 à 14.
